# EUROPÄISCHE PATENTSCHRIFT

(11) **EP 3 295 553 B1**
(45) Veröffentlichungstag und Bekanntmachung des Hinweises auf die Patenterteilung: **12.12.2018**
(21) Anmeldenummer: 16723978.9
(22) Anmeldetag: 09.05.2016
(51) Int. Cl.: H02N 2/10, H02N 2/00

(54) **PIEZOELEKTRISCHER DREHANTRIEB MIT EINEM ALS BLATTFEDER AUSGEBILDETEN SPANNMITTEL**
PIEZOELECTRIC ROTARY DRIVE WITH LEAF SPRING TENSIONING MEANS
SYSTÈME D'ENTRAÎNEMENT ROTATIF PIÉZOÉLECTRIQUE COMPRENANT UN MOYEN DE TENSION SOUS LA FORME D'UN RESSORT À LAME

(30) Priorität: 08.05.2015 DE 102015208591
(43) Veröffentlichungstag der Anmeldung: 21.03.2018
(73) Patentinhaber: Physik Instrumente (PI) GmbH & Co. KG, 76228 Karlsruhe (DE)
(72) Erfinder: HÜBNER, Reinhard, 76337 Waldbronn (DE); LUCKERT, Hansjörg, 76137 Karlsruhe (DE)
(74) Vertreter: Grünecker Patent- und Rechtsanwälte PartG mbB
(86) Internationale Anmeldenummer: PCT/EP2016/060306
(87) Internationale Veröffentlichungsnummer: WO 2016/180766

(56) Entgegenhaltungen:
- WO-A1-2007/022764
- DE-A1-102011 109 590
- US-A- 5 410 206
- US-A1- 2015 076 965

## Beschreibung

Die Erfindung betrifft einen piezoelektrischen Drehantrieb für eine Welle, mit wenigstens einem piezoelektrischen Aktor, einem verstellbaren und/oder verformbaren Rahmen, der einen Kupplungsabschnitt aufweist, welcher zur Bewerkstelligung eines Haft-Gleit-Antriebs kraftschlüssig mit der Welle koppelbar ist, und wenigstens einem Spannmittel, welches ausgebildet ist, um den Kupplungsabschnitt und/oder den Aktor und/oder die Welle mit einer Vorspannkraft zu beaufschlagen.

Ein gattungsgemäßer, piezoelektrischer Drehantrieb ist aus der DE 10 2011 109 590 A1 bekannt. Dort wird der Kupplungsabschnitt (13) durch eine Federklammer (4) mit einer Klemmkraft beaufschlagt, um einerseits den Anpressdruck des Kupplungsabschnitts (13) an die Welle (2) zu erhöhen und andererseits zwei Abschnitte (13,14) des Rahmens (12) durch die Federklammer (4) gegen den piezoelektrischen Aktor (11) zu drücken, so dass die Abschnitte (13,14) einer piezoelektrischen Verformung des Aktors (11) stets folgen. Wie aus Figur 1 der DE 10 2011 109 590 A1 ersichtlich ist, ist die Federklammer (4) bandförmig ausgebildet und endseitig zwischen zwei Halteabschnitten eingespannt. Die beiden Halteabschnitte für die Federklammer (4) befinden sich auf unterschiedlichen Seiten des Rahmens (12), so dass sich die Federklammer (4) etwa über die Hälfte des Umfangs der Welle bzw. des Rahmens (12) erstreckt. Dabei weist die Federklammer (4) eine erhebliche Länge sowie zwei Biege- bzw. Knickstellen auf.

Die Herstellung und Montage dieser Federklammer (4) sind vergleichsweise aufwendig. Zudem kommt es bei der bekannten Federklammer (4) mit der Zeit zu Setzerscheinungen, woraus ein geringerer Anpressdruck des Kupplungsabschnitts an die Welle und/oder ein geringerer Druck der beiden Abschnitte des Rahmens gegen den piezoelektrischen Aktor und somit eine geringere Vorspannungskraft auf den piezoelektrischen Aktor resultieren kann. Darüber hinaus führen Toleranzen hinsichtlich der Biegung zu einem undefinierten Anpressdruck bzw. einer undefinierten Vorspannungskraft. Piezoelektrische Haft-Gleit-Drehantriebe anderer Art mit gekrümmten Federelementen sind beispielsweise aus US 2015/076965 A1, US 5,410,206, WO 2007/022764 A1 und US 2010/290138 A1 bekannt.

Der vorliegenden Erfindung liegt daher die Aufgabe zu Grunde, den gattungsgemäßen, piezoelektrischen Drehantrieb zu verbessern, indem die Herstellung und Montage des Spannmittels vereinfacht werden.

Zur Lösung dieser Aufgabe stellt die Erfindung einen piezoelektrischen Drehantrieb für eine Welle bereit, mit wenigstens einem piezoelektrischen Aktor, einem verstellbaren und/oder verformbaren Rahmen, der einen Kupplungsabschnitt aufweist, welcher zur Bewerkstelligung eines Haft-Gleit-Antriebs kraftschlüssig mit der Welle koppelbar ist, und wenigstens einem Spannmittel, welches ausgebildet ist, um den Kupplungsabschnitt und/oder den Aktor und/oder die Welle mit einer Vorspannkraft zu beaufschlagen, wobei das Spannmittel als Blattfeder ausgebildet ist, die sich im entspannten Zustand im Wesentlichen in einer Ebene, vorzugsweise entlang einer geraden Linie, erstreckt. Derartige Spannmittel sind mit nur geringem Aufwand und damit kostengünstig herstellbar. 'Im Wesentlichen in einer Ebene' bezieht sich hierbei auf die übliche Herstellungsgenauigkeit bzw. übliche Herstellungstoleranz für die in einem Ausführungsbeispiel eingesetzten Bleche.

Eine Blattfeder wird beispielsweise im Fahrzeugbau bei Geländewagen, Lkw oder Transportern eingesetzt, um eine einfache und kostengünstige Radaufhängung zu bewerkstelligen. Die Blattfeder wird vorzugsweise an beiden Enden eingespannt (doppelseitige Blattfeder) und mittig mit einer quer bzw. senkrecht zur Erstreckungsebene der Blattfeder ausgerichteten Last beansprucht. Alternativ kann eine Blattfeder auch nur einseitig an einem Ende eingespannt werden (einseitige Blattfeder), wobei die auslenkende Kraft quer bzw. senkrecht zur Erstreckungsebene der Blattfeder auf das andere Ende der Blattfeder einwirkt. Die Blattfeder besteht beispielsweise aus einem flachen, näherungsweise rechteckigen Profil, beispielsweise aus Federstahl. Demnach bedarf eine Blattfeder keiner aufwendigen Formgebung und kann mit geringem Aufwand montiert werden. Insbesondere ist im Gegensatz zu der aus dem Stand der Technik bekannten Lösung keine Führung des Spannmittels über den halben Umfang der Welle und des Rahmens notwendig. Demnach kann anstatt einer vorgeformten oder umgeformten und umgreifenden Feder eine ebene Feder verwendet werden. Die Vorteile einer solchen ebenen Feder sind zum einen der Wegfall eines entsprechenden Umformschritts sowie zum anderen die Möglichkeit der Verwendung von spröden Materialien mit einer wesentlich höheren Streckgrenze, so dass deutlich höhere Vorspannkräfte aufbringbar sind. Die Blattfeder ist vorzugsweise als ebene Blattfeder ausgebildet.

Die Erfindung stellt eine Weiterentwicklung der in der DE 10 2011 109 590 A1 beschriebenen Erfindung dar und basiert im Wesentlichen auf dem darin beschriebenen mechanischen Prinzip, siehe insbesondere die Abschnitte [0001] bis [0030], in denen das Erfindungsprinzip sowie das erste Ausführungsbeispiel beschrieben werden.

Vorteilhafte Weiterbildungen der Erfindung sind Gegenstände der abhängigen Ansprüche.

Es kann von Vorteil sein, wenn das Spannmittel als doppelseitige Blattfeder ausgebildet ist und zwischen zwei Halteabschnitten eingespannt ist. Im Vergleich zur einseitigen Blattfeder können dadurch noch höhere Vorspannkräfte erzeugt werden. Zudem gelingt hierdurch eine vereinfachte Miniaturisierung des piezoelektrischen Drehantriebs. Insbesondere eine symmetrische Ausführung der doppelseitigen Blattfeder führt zu einer äußerst einfachen Montage derselben.

Es kann ebenfalls nützlich sein, wenn das Spannmittel über die Federlänge eine konstante Biegespannung erzeugt, wobei sich das Spannmittel bevorzugt zu wenigstens einem Ende, besonders bevorzugt zu beiden Enden, verjüngt. Vorzugsweise verjüngt sich das Spannmittel ausgehend von einem Belastungsbereich, bevorzugt einem Mittelbereich, der in bevorzugter Ausgestaltung eine konstante Breite aufweist, wenigstens bis zu einem oder mehreren Halteabschnitten, an dem oder denen das Spannmittel eingespannt ist. Die Verjüngung muss daher nicht bis zum Ende des Spannmittels reichen. Rechteckige Blattfendern konstanter Dicke nutzen das vorhandene Material nicht optimal aus. Besser geeignet ist daher eine Form, bei der die Biegespannungen über die Federlänge konstant bleiben. So lässt sich eine gleichmäßige Materialbeanspruchung über die Länge der Feder erreichen. Vorzugsweise verjüngt sich das Spannmittel bei gleichbleibender Dicke des Materials über trapezförmige Übergangsabschnitte durch Verringerung der Breite. Alternativ umfasst das Spannmittel kegelstupfförmige oder pyramidenförmige Übergangsabschnitte und verjüngt sich durch gleichzeitige Verringerung von Dicke und Breite. Derartig geformte Blattfedern sind als Parabelfedern, Trapezfedern oder Hyperbelfedern bekannt.

Es kann sich als praktisch erweisen, wenn der piezoelektrische Aktor den Kupplungsabschnitt in einer Haftphase oder in einer Gleitphase des Haft-Gleit-Antriebs entgegen der Vorspannkraft des Spannmittels antreibt. Dadurch wird das Spannmittel zunehmend gespannt bzw. aufgeladen, wobei sich die Rückstellkraft des Spannmittels erhöht. Dadurch kann ein Spannungspotenzial aufgebaut werden, das beispielsweise in einer anderen Antriebsphase des Haft-Gleit-Antriebs vorteilhaft genutzt werden kann.

Es kann ebenfalls sinnvoll sein, wenn das Spannmittel den Kupplungsabschnitt in einer Gleitphase oder in einer Haftphase des Haft-Gleit-Antriebs aufgrund der Vorspannkraft des Spannmittels verdrängt. Ein zuvor aufgebautes Spannungspotenzial des Spannmittels kann dabei entladen werden.

Es kann von Vorteil sein, wenn sich der Kupplungsabschnitt in der Haftphase des Haft-Gleit-Antriebs gemeinsam mit der Welle um die Wellenachse dreht. Im Vergleich zu einer aus der US 5,410,206 bekannten Lösung, bei der die Welle durch eine Tangentialbewegung des Kupplungsabschnitts angetrieben wird, wird die Welle durch den sich mit der Welle drehenden Kupplungsabschnitt besser geführt, wobei auch größere mechanische Kräfte übertragen werden können.

Es kann sich auch als Vorteil erweisen, wenn der Kupplungsabschnitt ein Auflager aufweist, welches sich zumindest vorübergehend, vorzugsweise mittig zwischen zwei Halteabschnitten des Spannmittels, an dem Spannmittel abstützt, wobei vorzugsweise das Auflager in der Haftphase oder in der Gleitphase des Haft-Gleit-Antriebs entgegen der Vorspannkraft des Spannmittels gegen das Spannmittel gedrückt wird und/oder in der Gleitphase oder in der Haftphase des Haft-Gleit-Antriebs durch das das Spannmittel aufgrund der Vorspannkraft des Spannmittels verdrängt wird. Vorzugsweise wird das Spannmittel beim Aufbau des Spannungspotenzials auf Biegung beansprucht. Dabei drückt das Auflager vorzugsweise mittig zwischen zwei Halteabschnitten beispielsweise senkrecht zur Erstreckungsebene auf die Blattfeder, so dass die Blattfeder im Wesentlichen in einen gekrümmten Zustand überführt wird. Diese Ausführung hat den Vorteil, dass der Kupplungsabschnitt unmittelbar mit dem Spannmittel interagiert. Wenn die Blattfeder im Bereich des Kontaktes mit dem Auflager des Kupplungsabschnitts in vorteilhafter Weise eine konstante Breite aufweist, während die sich daran anschließenden Blattfederabschnitte hinsichtlich der Breite verjüngen, kommt es im gekrümmten Zustand der Blattfeder zu einer lokalen Überhöhung der Biegespannung bzw. der Verformung im Bereich des Kontaktes der Blattfeder mit dem Auflager, welche zu einer leichten V-Form in der Blattfeder und einer stabilen Gleichgewichtslage auf dem Auflager führt, so dass eine Verschiebung der Blattfeder gegenüber dem Auflager verhindert ist.

Es kann sich auch als praktisch erweisen, wenn das Spannmittel aus einem spröden Werkstoff hergestellt ist. Spröde Werkstoffe zerreißen nahe der Elastizitätsgrenze ohne oder mit nur geringer plastischer Verformung (Sprödbruch). Solche Materialien besitzen meist eine große Härte. Es können somit verhältnismäßig große Kräfte aufgebracht werden. Diese Ausführungsform erschließt die Verwendung völlig neuartiger Werkstoffe für das Spannmittel, insbesondere metallische oder keramische Werkstoffe. Somit ist der erfindungsgemäße piezoelektrische Drehantrieb nicht mehr durch den Werkstoff des Spannmittels hinsichtlich seiner Einsatzmöglichkeiten limitiert. Vielmehr ergeben sich weitere Anwendungsfelder wie etwa ein hochreines Vakuum, starke umgebende Magnetfelder oder eine kryogene Umgebung.

Es kann sinnvoll sein, wenn das Spannmittel zumindest in einem belasteten Bereich, vorzugsweise über die gesamte Länge des Spannmittels, frei von plastischen Verformungen ist. Der belastete Bereich erstreckt sich vorzugsweise zwischen zwei Halteabschnitten, zwischen denen das Spannmittel eingespannt ist, bzw. zwischen den Stellen des Lasteintrags und Lastaustrags. Plastische Verformungen sind potentielle Schwachstellen und begrenzen damit den Einsatzbereich des Spannmittels, insbesondere die jeweils erzeugbaren und übertragbaren Spannkräfte. Weiterhin kann es von Vorteil sein, wenn das Spannmittel und/oder der piezoelektrische Aktor und/oder die Welle an derselben Längsseite des Rahmens angeordnet sind. Dies erlaubt einen einfachen Aufbau des Rahmens bei gleichzeitig sicherer Übertragung hoher Spannkräfte. Insbesondere kann durch eine derartige Anordnung mit nur geringem Aufwand auch eine Vorspannung des piezoelektrischen Aktors relativ zum Rahmen sichergestellt werden.

Nach einer weiteren vorteilhaften Ausgestaltung umgibt der Kupplungsabschnitt die Welle zumindest abschnittsweise, vorzugsweise um über mehr als die Hälfte des Umfangs, wobei der Kupplungsabschnitt vorzugsweise zwei Schenkel aufweist, die eine Kupplungsöffnung definieren, wobei einer der Schenkel einen Halteabschnitt zur Einspannung des Spannmittels bildet und der andere Schenkel ein Auflager bildet. Eine derartige Anordnung erlaubt eine handhabungsfreundliche Montage der Welle sowie des Aktors an dem Rahmen. In bevorzugter Weise hat der das Auflager bildende Schenkel oder der den Halteabschnitt bildende Schenkel zwei durch einen Nichteingriffsabschnitt voneinander getrennte Eingriffsabschnitte und der entsprechend andere Schenkel einen Eingriffsabschnitt, wobei die Eingriffsabschnitte in Eingriff mit der Welle sind und der Nichteingriffsabschnitt entsprechend keinen Kontakt zur Welle hat. Insgesamt ergeben sich also drei voneinander getrennte Eingriffsabschnitte, welche mit der Welle in Kontakt stehen. Hierdurch ist gewährleistet, dass der Kupplungsabschnitt eine im Wesentlichen rotative Bewegung auf die Welle überträgt und diese beispielsweise nicht zu einer Taumelbewegung angeregt wird.

Besonders bevorzugt weist der Rahmen drei Schenkel auf, die in den Zwischenräumen zwei Aufnahmen bilden, wobei in der einen Aufnahme zwischen einem ersten äußeren Schenkel und einem mittleren Schenkel die Welle angeordnet ist und in der anderen Aufnahme zwischen einem zweiten äußeren Schenkel und dem mittleren Schenkel der piezoelektrische Aktor angeordnet ist, wobei das Spannmittel zwischen den äußeren beiden Schenkeln des Rahmens eingespannt ist, wobei der mittlere Schenkel des Rahmens vorzugsweise ein Auflager bildet, wobei der zweite äußere Schenkel gelenkig, vorzugsweise über ein Festkörpergelenk, mit dem mittleren Schenkel verbunden ist. Die Kraftübertragung zwischen dem Spannmittel und dem Kupplungsabschnitt des Rahmens kann auf diese Weise besonders vorteilhaft erfolgen. In dieser Ausführungsform befinden sich sowohl die Welle als auch der piezoelektrische Aktor zwischen den äußeren beiden Schenkeln des Rahmens, zwischen denen das Spannmittel gespannt ist. Dadurch können der Aktor, die Welle und der Kupplungsabschnitt zugleich durch dasselbe Spannmittel mit einer Vorspannkraft beaufschlagt werden, was den Anpressdruck und damit die übertragbaren Kräfte zwischen den beweglichen Teilen des piezoelektrischen Drehantriebs erhöht.

Weitere bevorzugte Ausführungsbeispiele der Erfindung ergeben sich durch Kombination der in den Ansprüchen, Figuren und der Beschreibung offenbarten Merkmale.

### Kurze Beschreibung der Figuren

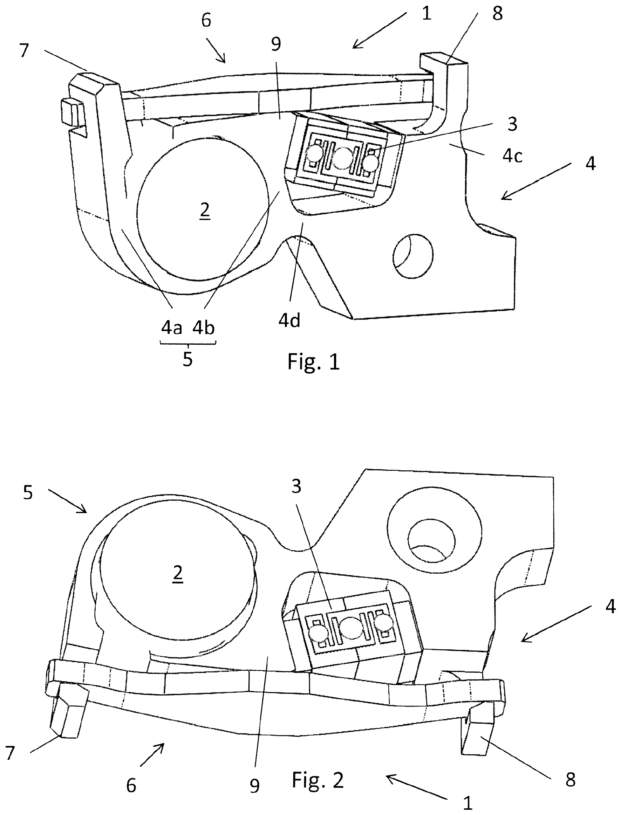

- Figur 1: zeigt eine perspektivische Ansicht des piezoelektrischen Drehantriebs nach einem Ausführungsbeispiel der Erfindung.
- Figur 2: zeigt eine weitere perspektivische Ansicht des piezoelektrischen Drehantriebs aus Figur 1.

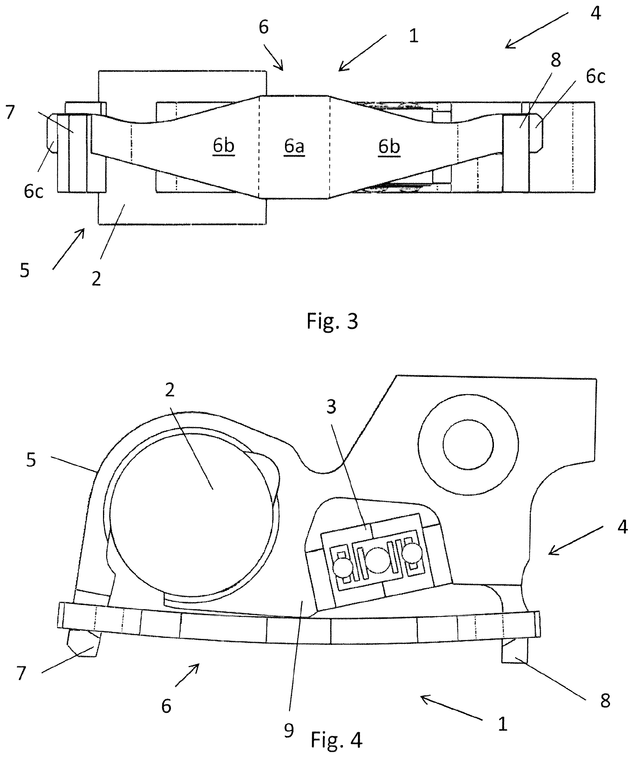

- Figur 3: zeigt eine Draufsicht des piezoelektrischen Drehantriebs aus Figur 1 im Wesentlichen senkrecht zur Achsrichtung der Welle und senkrecht zu Erstreckungsebene des Spannmittels mit Blick auf das Spannmittel.
- Figur 4: zeigt eine Seitenansicht des piezoelektrischen Drehantriebs aus Figur 1 in Achsrichtung der Welle mit Blick auf den piezoelektrischen Aktor.
- Figur 5: zeigt eine weitere Seitenansicht des piezoelektrischen Drehantriebs aus Figur 1 in Achsrichtung der Welle mit Blick auf den piezoelektrischen Aktor in einem ersten Zustand des Spannmittels.
- Figur 6: zeigt eine weitere Seitenansicht des piezoelektrischen Drehantriebs aus Figur 1 in Achsrichtung der Welle mit Blick auf den piezoelektrischen Aktor in einem zweiten Zustand des Spannmittels, in welchem der Rahmen und das Spannmittel gegenüber dem ersten Zustand gemäß Figur 5 elastisch verformt sind.
- Figur 7: zeigt eine perspektivische Ansicht einer Variante des Ausführungsbeispiels des piezoelektrischen Drehantriebs.
- Figur 8: zeigt eine Seitenansicht des piezoelektrischen Drehantriebs aus Figur 7 in Achsrichtung der Welle mit Blick auf den piezoelektrischen Aktor.
- Figur 9: zeigt eine perspektivische Ansicht der Variante des Ausführungsbeispiels des piezoelektrischen Drehantriebs aus Figur 7 mit Blick auf den Halteabschnitt gemäß dieser Variante.

### Detaillierte Beschreibung der bevorzugten Ausführungsbeispiele

Das bevorzugte Ausführungsbeispiel der Erfindung wird nachstehend mit Bezug auf die beiliegenden Figuren beschrieben.

Der Rahmen 4 des piezoelektrischen Drehantriebs 1 ist im Wesentlichen W-förmig ausgebildet und umfasst drei Schenkel 4a, 4b, 4c, die in den Zwischenräumen zwei Aufnahmen bilden, die sich zur selben Seite des Rahmens 4 hin öffnen. In einer dieser Aufnahmen zwischen einem ersten äußeren Schenkel 4a und dem mittleren Schenkel 4b ist die Welle 2 angeordnet, wobei die Wellenachse im Wesentlichen senkrecht zur Erstreckungsebene des Rahmens 4 ausgerichtet ist. Diese beiden Schenkel 4a, 4b des Rahmens 4 bilden einen im Wesentlichen U-förmigen Kupplungsabschnitt 5, der sich über mehr als die Hälfte des Umfangs der Welle 2 erstreckt und eine Kupplungsöffnung definiert.

In der anderen Aufnahme zwischen dem mittleren Schenkel 4b und dem zweiten äußeren Schenkel 4c des Rahmens 4 ist der piezoelektrische Aktor 3 angeordnet. Der zweite äußere Schenkel 4c ist über ein Festkörpergelenk 4d mit dem mittleren Schenkel 4b des Rahmens 4 gelenkig verbunden.

Der piezoelektrische Aktor 3 wird durch Anlegen einer Steuerspannung an Elektroden, die auf dem Aktorelement befestigt sind, in einer Arbeitsrichtung verformt, die sich tangential oder im Wesentlichen tangential zum Umfang der Welle 2 erstreckt. Dadurch wird der mittlere Schenkel 4b des Rahmens 4, der einen Teil des Kupplungsabschnitts 5 bildet, durch Ansteuerung des piezoelektrischen Aktors 3 in Umfangsrichtung der Welle 2 bewegt. Aufgrund der mechanischen Gegebenheiten, insbesondere weil der mittlere Schenkel 4b im Wesentlichen starr mit dem ersten Schenkel 4a des Rahmens 4 verbunden ist, um den Kupplungsabschnitt 5 zu bilden, aber über das Festkörpergelenk 4d gelenkig an den zweiten äußeren Schenkel 4c des Rahmens 4 gekoppelt ist, an dem sich der piezoelektrische Aktor 3 abstützt, wird die lineare Bewegung des piezoelektrischen Aktors 3 in eine Dreh- bzw. Schwenkbewegung des Kupplungsabschnitts 5 um die Wellenachse übersetzt.

Das Spannmittel 6 ist im vorliegenden Ausführungsbeispiel als doppelseitige, ebene Blattfeder ausgebildet und zwischen zwei Halteabschnitten 7, 8 an den äußeren beiden Schenkeln 4a, 4c des Rahmens 4 eingespannt. Dabei weist das Spannmittel 6 eine konstante Dicke auf und erstreckt sich im unbelasteten und entspannten Zustand im Wesentlichen in einer Ebene entlang einer geraden Linie zwischen den beiden Halteabschnitten 7, 8. Ausgehend von einem näherungsweise rechteckigen Mittelbereich 6a, in welchem das Spannmittel 6 die größte Breite aufweist, verjüngt sich das Spannmittel 6 zu beiden Enden in näherungsweise trapezförmigen Übergangsabschnitten 6b bis hin zu hakenförmigen Endabschnitten 6c, die sich mit den hakenförmigen Halteabschnitten 7, 8 formschlüssig in Eingriff befinden. Diese Form der doppelseitigen Blattfeder erzeugt über die Federlänge eine konstante oder zumindest näherungsweise konstante Biegespannung und wird beispielsweise als Trapezfeder bezeichnet. Die Halteabschnitte 7, 8 sind jeweils an den freien Enden der äußeren beiden Schenkel 4a, 4c des Rahmens 4 ausgebildet. Zumindest der belastete Bereich des Spannmittels 6 zwischen den zwei Halteabschnitten 7, 8 ist frei von plastischen Verformungen, so dass in diesem kontinuierlichen Bereich zwischen den beiden Halteabschnitten 7, 8 keine mechanischen Schwachstellen bestehen.

Der mittlere Schenkel 4b des Rahmens 4, der einen Teil des Kupplungsabschnitts 5 darstellt, bildet an seinem freien Ende ein Auflager 9, welches sich mittig zwischen den beiden Halteabschnitten 7, 8 an dem Spannmittel 6 abstützt. In der Haftphase oder in der Gleitphase des Haft-Gleit-Antriebs, je nach Betriebsrichtung des piezoelektrischen Drehantriebs, wird das Auflager 9 entgegen der Vorspannkraft des Spannmittels 6 gegen das Spannmittel 6 gedrückt. Dabei wird das Spannmittel 6 aufgeladen, wobei sich das Spannungspotenzial des Spannmittels 6 erhöht. In der entsprechend folgenden Gleitphase oder in der Haftphase des Haft-Gleit-Antriebs wird das Auflager 9 durch das Spannmittel 6 aufgrund der Vorspannkraft des Spannmittels 6 verdrängt. Die durch den Eingriff zwischen Spannmittel 6 und Auflager 9 resultierenden Kräfte unterstützen die zum rotativen Antrieb der Welle genutzte Dreh- oder Schwenkbewegung des Kupplungsabschnitts.

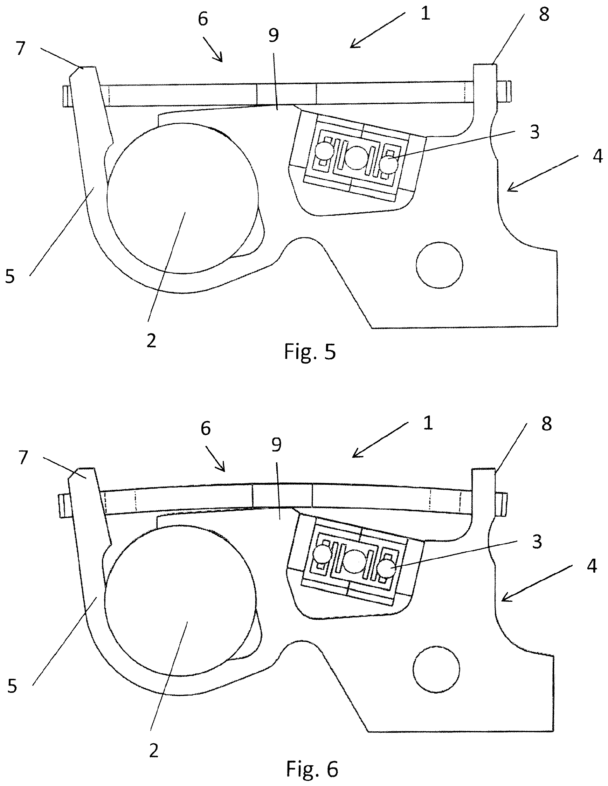

Aus darstellungstechnischen Gründen weist das Spannmittel 6 in Figur 5 eine ebene Form auf, obwohl es in der Realität in montiertem Zustand immer eine leicht gekrümmte aufweist. Durch die geometrischen Verhältnisse zwischen dem Auflager 9 und den beiden Halteabschnitten 7, 8 ergibt sich in montiertem Zustand des Spannmittels 6 besagte Krümmung, wobei die Verformung des Spannmittels 6 rein elastisch ist. Durch die elastische Verformung des Spannmittels 6 wird eine Kraft erzeugt, welche dazu führt, dass das Auflager 9 den Mittelbereich 6a im Wesentlichen senkrecht zu Erstreckungsebene des Spannmittels 6 verdrängt. Im Übrigen ergibt sich durch die Lagerung bzw. Halterung des Spannmittels 6 durch die beiden Halteabschnitte 7, 8 und mit der entsprechenden Abstützung am Auflager 9 eine statisch bestimmte Halterung.

Im Ergebnis ermöglicht die vorliegende Erfindung die Verwendung eines besonders einfach herzustellenden und montierbaren Spannmittels 6. Insbesondere kann anstatt einer vorgeformten oder umgeformten Feder, die sich wie im ersten Ausführungsbeispiel der DE 10 2011 109 590 A1 um den halben Umfang der Welle und des Rahmens erstreckt und auf Zug beansprucht wird, eine ebene Feder verwendet werden, die als Blattfeder ausgebildet ist und mittig auf Biegung beansprucht wird. Die Vorteile einer solchen Feder sind der Wegfall eines entsprechenden Umformschritts und die Verwendung von spröden bzw. plastisch nicht verformbaren Materialien mit einer wesentlich höheren Streckgrenze, so dass deutlich größere Vorspannkräfte aufbringbar sind. Zudem kann die Länge des Spannmittels deutlich verringert werden, so dass eine deutliche Materialeinsparung realisiert werden kann. Schließlich bietet die vorliegende Erfindung die Möglichkeit, auf einfache und kostengünstige Weise eine Vielzahl unterschiedlicher und leicht herzustellender Spannmittel bei vorhandener Geometrie des Rahmens 4 auszuprobieren, um hierdurch eine optimierte Anpassung der Feder- bzw. Vorspannungskräfte zu erzielen.

Ein weiteres bevorzugtes Ausführungsbeispiel der Erfindung wird nachstehend mit Bezug auf das voran genannte Ausführungsbeispiel und auf die beiliegenden Figuren beschrieben. Dieses weitere bevorzugte Ausführungsbeispiel entspricht in seiner Struktur dem oben beschriebenen Ausführungsbeispiel und nachfolgend werden lediglich weitere Details bzw. Änderungen erläutert. Die Halteabschnitte 7, 8 sind jeweils an den freien Enden der äußeren beiden Schenkel 4a, 4c des Rahmens 4 ausgebildet. Hierbei ist der Halteabschnitt 7 im Wesentlichen als Nut in dem Schenkel 4a ausgebildet, während der äußere Schenkel 4c im Wesentlichen eine Auskragung als Teil des Halteabschnitts 8 aufweist. Diese Geometrie der Halteabschnitte 7,8 erlaubt eine vergleichsweise einfache Herstellung des Rahmens 4 und auch eine einfache Montage des Spannmittels 6 von der Seite her. Insbesondere der äußere Schenkel 4c hat ganz speziellen Anforderungen zu genügen. Seine geometrische Ausgestaltung muss zum Einen gewährleisten, dass die aufgrund der Einbausituation resultierende Vorspannkraft des Spannmittels 6, die typischerweise zwischen 30 und 40 N beträgt, sicher aufgenommen wird, ohne dass es zu einer nennenswerten Deformation des äußeren Schenkels 4c kommt. Gleichzeitig muss der äußere Schenkel 4c elastische Eigenschaften aufweisen, die es ermöglichen, die aus der Aktordeformation resultierende Deformation des Rahmens in diesem Bereich auszugleichen, so dass es gerade nicht oder in nur vernachlässigbarer Weise zu einer nachteiligen Relativbewegung zwischen dem Spannmittel 6 und dem Halteabschnitt 8 kommt. Typischerweise darf der äußere Schenkel 4c bei einer Längenänderung des Aktors von 4 µm der zuvor beschriebenen gewünschten elastischen Deformation eine maximale Widerstandskraft von 1 N entgegensetzen. Um die vorgenannten Anforderungen zu erreichen, ist der äußere Schenkel 4c derart ausgebildet, dass er im Bereich der Auskragung bzw. angrenzend an diesen einen relativ großen Materialquerschnitt aufweist, um sich daran anschließend zum an den Schenkel 4c angrenzenden Teil des Rahmens 4 hin zu verringern bzw. zu verjüngen.

Dieses weitere bevorzugte Ausführungsbeispiel ermöglicht die gleichen Einsatzbereiche wie das vorangehend beschriebene Ausführungsbeispiel und weist ähnliche Vorteile auf.

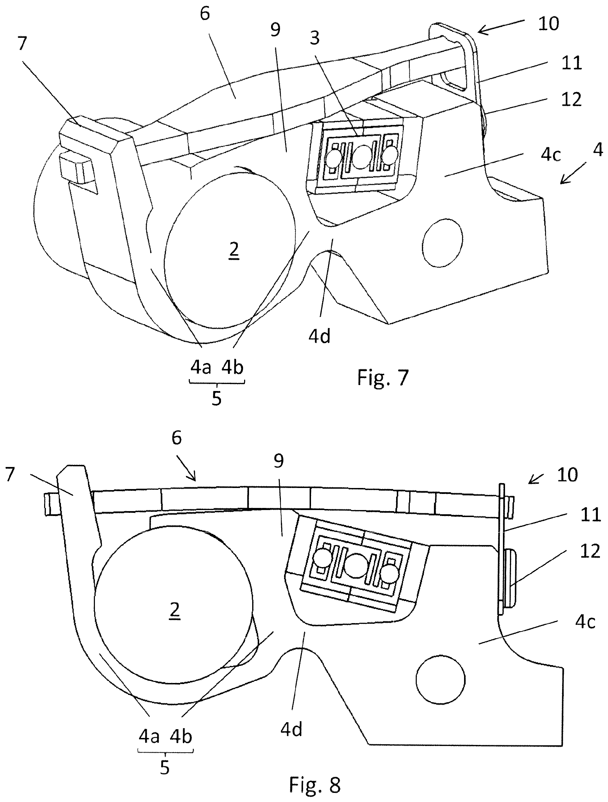

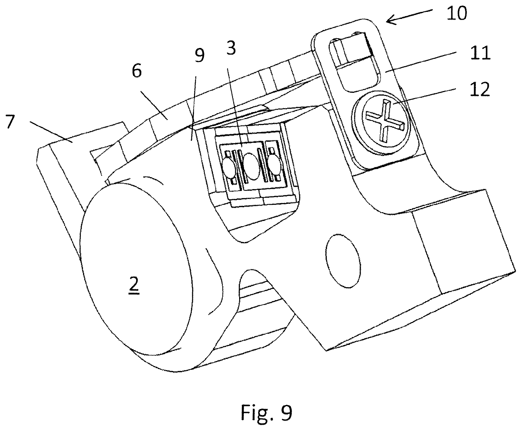

Eine Variante der bevorzugten Ausführungsbeispiele der Erfindung wird nachstehend mit Bezug auf die weiteren Figuren 7 bis 9 beschrieben. Diese Variante der bevorzugten Ausführungsbeispiele entspricht in seiner Struktur den oben beschriebenen Ausführungsbeispielen, und nachfolgend werden lediglich weitere Details bzw. Änderungen erläutert.

Das Spannmittel 6 ist in dieser Variante ebenfalls als doppelseitige, ebene Blattfeder ausgebildet und zwischen dem Halteabschnitt 7, der an dem äußeren Schenkeln 4a des Rahmens 4 ausgebildet ist, und dem Halteabschnitt 10, der an dem äußeren Schenkeln 4c des Rahmens 4 ausgebildet ist, eingespannt. Der Halteabschnitt 7 an dem äußeren Schenkeln 4a des Rahmens 4 entspricht dem Halteabschnitt der voran genannten Ausführungsbeispiele. Der Halteabschnitt 10 an dem äußeren Schenkel 4c des Rahmens 4 ist im Wesentlichen aus einem Blech 11 gebildet, das mit einer Schraube 12 an dem Schenkel 4c angeschraubt ist. In dem Blech 11 ist eine Öffnung ausgebildet, in die sich der Endabschnitt 6c des Spannmittels 6 erstreckt und - wie in den Figuren gezeigt - durch einen Vorsprung des Blechs gesichert ist. Durch die Gestaltung der Öffnung bzw. die Größe des Vorsprungs ist die Vorspannung des Spannmittels einstellbar. Alternativ kann eine entsprechende Einstellung der Vorspannung durch Verschiebung des Blechs 11 beispielsweise mittels eines Langlochs vorgenommen werden.

In der Öffnung des Blechs 11 ist das Spannmittel beidseitig geführt bzw. gehaltert, so dass ein Verrutschen oder Verschieben des Spannmittels in einer Richtung im Wesentlichen senkrecht zur Erstreckungsrichtung des Spannmittels wirkungsvoll unterbunden ist. Zudem bietet ein Blech ohne Weiteres die weiteren geforderten Lagereigenschaften, nämlich eine hohe Steifigkeit in Längserstreckungsrichtung des Blechs, um die Vorspannkraft des Spannmittels aufzunehmen, und gleichzeitig eine geringe Biegesteifigkeit, so dass das Blech entsprechend leicht deformierbar ist, um eine Relativbewegung zwischen dem Spannmittel und dem Blech zu unterbinden, wobei hierzu auch noch der Vorsprung des Blechs in vorteilhafter Weise beiträgt.

In dem gezeigten Ausführungsbeispiel ist der Halteabschnitt 10 an dem äußeren Schenkel 4c des Rahmens 4 im Wesentlichen aus einem Blech 11 gebildet, das mit einer Schraube 12 an dem aktornahen Schenkel 4c angeschraubt ist. Alternativ ist der Halteabschnitt an dem weiteren äußeren Schenkel 4a des Rahmens 4 im Wesentlichen aus einem Blech 11 gebildet, das mit einer Schraube an dem aktorfernen Schenkel 4a angeschraubt ist. In einer weiteren Alternative sind Halteabschnitte, beiden äußeren Schenkeln des Rahmens jeweils im Wesentlichen aus einem Blech gebildet, und jeweils mit einer Schraube an dem jeweiligen Schenkel angeschraubt.

Dieses weitere bevorzugte Ausführungsbeispiel und die erläuterten Alternativen ermöglichen die gleichen Einsatzbereiche wie die vorangehend beschriebenen Ausführungsbeispiele und weisen ähnliche Vorteile auf.

### Bezugszeichenliste

- 1: Piezoelektrischer Drehantrieb
- 2: Welle
- 3: Piezoelektrischer Aktor
- 4: Rahmen
- 4a-c: Schenkel des Rahmens
- 4d: Festkörpergelenk
- 5: Kupplungsabschnitt
- 6: Spannmittel
- 6a: Mittelbereich
- 6b: Übergangsabschnitt
- 6c: Endabschnitt
- 7, 8, 10: Halteabschnitte
- 9: Auflager

## Patentansprüche

1. Piezoelektrischer Drehantrieb (1) für eine Welle (2), mit wenigstens einem piezoelektrischen Aktor (3), einem verstellbaren und/oder verformbaren Rahmen (4), der einen Kupplungsabschnitt (5) aufweist, welcher zur Bewerkstelligung eines Haft-Gleit-Antriebs kraftschlüssig mit der Welle (2) koppelbar ist, und wenigstens einem Spannmittel (6), welches ausgebildet ist, um den Kupplungsabschnitt (5) und/oder den Aktor (3) und/oder die Welle (2) mit einer Vorspannkraft zu beaufschlagen, **dadurch gekennzeichnet, dass** das Spannmittel (6) als Blattfeder ausgebildet ist, die sich im entspannten Zustand im Wesentlichen in einer Ebene, vorzugsweise entlang einer geraden Linie, erstreckt.

2. Piezoelektrischer Drehantrieb (1) nach Anspruch 1, **dadurch gekennzeichnet, dass** das Spannmittel (6) als doppelseitige Blattfeder ausgebildet ist und zwischen zwei Halteabschnitten (7, 8, 10) eingespannt ist.

3. Piezoelektrischer Drehantrieb (1) nach einem der vorangehenden Ansprüche, **dadurch gekennzeichnet, dass** das Spannmittel (6) über die Federlänge eine konstante Biegespannung erzeugt, wobei sich das Spannmittel (6) vorzugsweise zu wenigstens einem Ende, bevorzugt zu beiden Enden, verjüngt.

4. Piezoelektrischer Drehantrieb (1) nach Anspruch 3, **dadurch gekennzeichnet, dass** sich das Spannmittel (6) ausgehend von einem mittleren Abschnitt mit konstanter Breite und/oder Dicke zu beiden Enden hin verjüngt.

5. Piezoelektrischer Drehantrieb (1) nach einem der vorangehenden Ansprüche, **dadurch gekennzeichnet, dass** der piezoelektrische Aktor (3) den Kupplungsabschnitt (5) in einer Haftphase oder in einer Gleitphase des Haft-Gleit-Antriebs entgegen der Vorspannkraft des Spannmittels (6) antreibt.

6. Piezoelektrischer Drehantrieb (1) nach einem der vorangehenden Ansprüche, **dadurch gekennzeichnet, dass** das Spannmittel (6) den Kupplungsabschnitt (5) in einer Gleitphase oder in einer Haftphase des Haft-Gleit-Antriebs aufgrund der Vorspannkraft des Spannmittels (6) verdrängt.

7. Piezoelektrischer Drehantrieb (1) nach einem der vorangehenden Ansprüche, **dadurch gekennzeichnet, dass** sich der Kupplungsabschnitt (5) in der Haftphase des Haft-Gleit-Antriebs gemeinsam mit der Welle (2) um die Wellenachse dreht.

8. Piezoelektrischer Drehantrieb (1) nach einem der vorangehenden Ansprüche, **dadurch gekennzeichnet, dass** der Kupplungsabschnitt (5) ein Auflager (9) aufweist, welches sich zumindest vorübergehend, vorzugsweise mittig zwischen zwei Halteabschnitten (7, 8, 10) des Spannmittels (6), an dem Spannmittel (6) abstützt, wobei vorzugsweise das Auflager (9) in der Haftphase oder in der Gleitphase des Haft-Gleit-Antriebs entgegen der Vorspannkraft des Spannmittels (6) gegen das Spannmittel (6) gedrückt wird und/oder in der Gleitphase oder in der Haftphase des Haft-Gleit-Antriebs durch das Spannmittel (6) aufgrund der Vorspannkraft des Spannmittels (6) verdrängt wird.

9. Piezoelektrischer Drehantrieb (1) nach einem der vorangehenden Ansprüche, **dadurch gekennzeichnet, dass** das Spannmittel (6) aus einem spröden Werkstoff hergestellt ist.

10. Piezoelektrischer Drehantrieb (1) nach einem der vorangehenden Ansprüche, **dadurch gekennzeichnet, dass** das Spannmittel (6) zumindest in einem belasteten Bereich, vorzugsweise über die gesamte Länge des Spannmittels (6), frei von plastischen Verformungen ist.

11. Piezoelektrischer Drehantrieb (1) nach einem der vorangehenden Ansprüche, **dadurch gekennzeichnet, dass** das Spannmittel (6) kraftschlüssig und/oder stoffschlüssig und/oder formschlüssig an wenigstens einem Halteabschnitt (7, 8, 10), vorzugsweise an zwei Halteabschnitten (7, 8, 10), befestigt ist, wobei vorzugsweise wenigstens einer der Halteabschnitte (7, 8, 10), bevorzugt beide Halteabschnitte (7, 8, 10), an dem Rahmen (3) ausgebildet ist/sind.

12. Piezoelektrischer Drehantrieb (1) nach einem der vorangehenden Ansprüche, **dadurch gekennzeichnet, dass** der Kupplungsabschnitt (5) die Welle (2) zumindest abschnittsweise, vorzugsweise um über mehr als die Hälfte des Umfangs umgibt, wobei der Kupplungsabschnitt (5) vorzugsweise zwei Schenkel (4a, 4b) aufweist, die eine Kupplungsöffnung definieren, wobei einer der Schenkel (4a) einen Halteabschnitt (7) zur Einspannung des Spannmittels (6) bildet und der andere Schenkel (4b) ein Auflager (9) bildet.

13. Piezoelektrischer Drehantrieb (1) nach einem der vorangehenden Ansprüche, **dadurch gekennzeichnet, dass** der Rahmen (4) drei Schenkel (4a, 4b, 4c) aufweist, die in den Zwischenräumen zwei Aufnahmen bilden, wobei in der einen Aufnahme zwischen einem ersten äußeren Schenkel (4a) und einem mittleren Schenkel (4b) die Welle (2) angeordnet ist und in der anderen Aufnahme zwischen einem zweiten äußeren Schenkel (4c) und dem mittleren Schenkel (4b) der piezoelektrische Aktor (3) angeordnet ist, wobei das Spannmittel (6) zwischen den äußeren beiden Schenkeln (4a, 4c) des Rahmens (4) eingespannt ist, wobei der mittlere Schenkel (4b) des Rahmens vorzugsweise ein Auflager (9) bildet, wobei der zweite äußere Schenkel (4c) gelenkig, vorzugsweise über ein Festkörpergelenk (4d), mit dem mittleren Schenkel (4b) verbunden ist.

14. Piezoelektrischer Drehantrieb (1) nach einem der vorangehenden Ansprüche, **dadurch gekennzeichnet, dass** zumindest einer der Halteabschnitte (10) aus einem Element (11) ausgebildet ist, welches das Spannmittel (6), insbesondere einstellbar, sichert.

15. Piezoelektrischer Drehantrieb (1) nach einem der vorangehenden Ansprüche, **dadurch gekennzeichnet, dass** zumindest einer der Halteabschnitte (10) aus einem Element (11) ausgebildet ist, das an einem, insbesondere dem zweiten äußeren, der Schenkel (4c), insbesondere einstellbar, gesichert ist.

## Claims

1. Piezoelectric rotary drive (1) for a shaft (2), comprising at least one piezoelectric actuator (3), an adjustable and/or deformable frame (4) which has a coupling section (5) that can be coupled to said shaft (2) in a force-fit manner in order to accomplish a stick-slip drive, and at least one loading means (6) which is designed to apply a preloading force to said coupling section (5) and/or said actuator (3) and/or said shaft (2), **characterized in that** said loading means (6) is designed as a leaf spring which in the relaxed state extends substantially in a plane, preferably along a straight line.

2. Piezoelectric rotary drive (1) according to claim 1, **characterized in that** said loading means (6) is designed as a double-sided leaf spring and clamped in between two retaining sections (7, 8, 10).

3. Piezoelectric rotary drive (1) according to one of the preceding claims **characterized in that** said loading means (6) generates a constant bending stress over the length of the spring, where said loading means (6) preferably tapers toward at least one end, preferably towards both ends.

4. Piezoelectric rotary drive (1) according to claim 3, **characterized in that** said loading means (6), starting out from a center section, tapers towards both ends while having a constant width and/or thickness.

5. Piezoelectric rotary drive (1) according to one of the preceding claims **characterized in that** said piezoelectric actuator (3) drives said coupling section (5) in a stick phase or in a slip phase of said stick-slip drive against the preloading force of said loading means (6).

6. Piezoelectric rotary drive (1) according to one of the preceding claims **characterized in that** said loading means (6) in a slip phase or in a stick phase of said stick-slip drive displaces said coupling section (5) against the preloading force of said loading means (6).

7. Piezoelectric rotary drive (1) according to one of the preceding claims **characterized in that** said coupling section (5) rotate together with said shaft (2) about the shaft axis in the stick phase of said stick-slip drive.

8. Piezoelectric rotary drive (1) according to one of the preceding claims **characterized in that** said coupling section (5) comprises a bearing (9) which is supported at least temporarily on said loading means (6), preferably centrally between two retaining sections (7, 8, 10) of said loading means (6), where preferably said bearing (9) in the stick phase or in the slip phase of said stick-slip drive is pressed against said loading means (6) against the preloading force of said loading means (6) and/or in the slip phase or in the stick phase of said stick-slip drive is displaced by said loading means (6) due to the preloading force of said loading means (6).

9. Piezoelectric rotary drive (1) according to one of the preceding claims **characterized in that** said loading means (6) is be made from brittle material.

10. Piezoelectric rotary drive (1) according to one of the preceding claims **characterized in that** said loading means (6) is free of plastic deformation at least in a loaded region, preferably over the entire length of said loading means (6).

11. Piezoelectric rotary drive (1) according to one of the preceding claims **characterized in that** said loading means (6) is attached to at least one retaining section (7, 8, 10) in a force-fit and/or substance-fit and/or a form-fit manner, preferably to two retaining sections (7, 8, 10), where preferably at least one of said retaining sections (7, 8, 10), preferably both retaining sections (7, 8, 10), is/are formed on said frame (3).

12. Piezoelectric rotary drive (1) according to one of the preceding claims **characterized in that** said coupling section (5) surrounds said shaft (2) at least in sections, preferably over more than half the circumference, where said coupling section (5) preferably comprises two legs (4a, 4b) defining a coupling opening, where one of said legs (4a) forms a retaining section (7) for clamping in said loading means and said other leg (4b) forms a bearing (9).

13. Piezoelectric rotary drive (1) according to one of the preceding claims **characterized in that** said frame (4) comprises three legs (4a, 4b, 4c) which form two receptacles in the intermediate spaces, where said shaft (2) is arranged in said one receptacle between a first outer leg (4a) and a center leg (4b), and said piezoelectric actuator (3) is arranged in said other receptacle between a second outer leg (4c) and said center leg (4b), where said loading means (6) is clamped in between said two outer legs (4a, 4c) of said frame (4), where said center leg (4b) of said frame (4) preferably forms a bearing (9), where said second outer leg (4c) is connected in a hinged manner to said center leg (4b), preferably by way of a flexure hinge (4d).

14. Piezoelectric rotary drive (1) according to one of the preceding claims **characterized in that** at least one of said retaining sections (10) is formed from an element (11) which locks said loading means (6), in particular in an adjustable manner.

15. Piezoelectric rotary drive (1) according to one of the preceding claims **characterized in that** at least one of said retaining sections (10) is formed from a element (11) which is locked at one of said legs (4c), in particular the second outer one, in particular in an adjustable manner.

## Revendications

1. Système d'entraînement de rotation (1) piézoélectrique pour un arbre (2), comprenant au moins un actionneur piézoélectrique (3), un cadre (4) déplaçable et/ou déformable, qui présente un tronçon de couplage (5) pouvant être couplé par adhérence à l'arbre (2) pour assurer un entraînement par adhérence-glissement, et au moins un moyen de mise en tension (6), qui est conçu pour appliquer une force de précontrainte au tronçon de couplage (5) et/ou à l'actionneur (3) et/ou à l'arbre (2), **caractérisé en ce que** le moyen de mise en tension (6) est réalisé sous forme de ressort à lame, qui, dans l'état détendu, s'étend sensiblement dans un plan, de préférence le long d'une ligne rectiligne.

2. Système d'entraînement de rotation (1) piézoélectrique selon la revendication 1, **caractérisé en ce que** le moyen de mise en tension (6) est réalisé en tant que ressort à lame bilatéral et est enserré entre deux tronçons de maintien (7, 8, 10).

3. Système d'entraînement de rotation (1) piézoélectrique selon l'une des revendications précédentes, **caractérisé en ce que** le moyen de mise en tension (6) produit une tension de flexion constante sur toute la longueur de ressort, le moyen de mise en tension (6) se rétrécissant de préférence en direction d'au moins une extrémité, de préférence en direction des deux extrémités.

4. Système d'entraînement de rotation (1) piézoélectrique selon la revendication 3, **caractérisé en ce que** le moyen de mise en tension (6) se rétrécit en direction des deux extrémités, à partir d'un tronçon central de largeur et/ou d'épaisseur constante.

5. Système d'entraînement de rotation (1) piézoélectrique selon l'une des revendications précédentes, **caractérisé en ce que** l'actionneur piézoélectrique (3) entraîne le tronçon de couplage (5) dans une phase d'adhérence ou dans une phase de glissement de l'entraînement par adhérence-glissement, à l'encontre de la force de précontrainte du moyen de mise en tension (6) .

6. Système d'entraînement de rotation (1) piézoélectrique selon l'une des revendications précédentes, **caractérisé en ce que** le moyen de mise en tension (6) repousse le tronçon de couplage (5) dans une phase de glissement ou dans une phase d'adhérence de l'entraînement par adhérence-glissement, en raison de la force de précontrainte du moyen de mise en tension (6).

7. Système d'entraînement de rotation (1) piézoélectrique selon l'une des revendications précédentes, **caractérisé en ce que** dans la phase d'adhérence de l'entraînement par adhérence-glissement, le tronçon de couplage (5) tourne en commun avec l'arbre (2) autour de l'axe d'arbre.

8. Système d'entraînement de rotation (1) piézoélectrique selon l'une des revendications précédentes, **caractérisé en ce que** le tronçon de couplage (5) comporte une zone d'appui (9), qui, tout au moins de manière temporaire, de préférence au milieu entre deux tronçons de maintien (7, 8, 10) du moyen de mise en tension (6), s'appuie contre le moyen de mise en tension (6), la zone d'appui (9) étant de préférence pressée contre le moyen de mise en tension (6) pendant la phase d'adhérence ou la phase de glissement de l'entraînement par adhérence-glissement, à l'encontre de la force de précontrainte du moyen de mise en tension (6), et/ou étant repoussée par le moyen de mise en tension (6) dans la phase de glissement ou la phase d'adhérence, en raison de la force de précontrainte du moyen de mise en tension (6).

9. Système d'entraînement de rotation (1) piézoélectrique selon l'une des revendications précédentes, **caractérisé en ce que** le moyen de mise en tension (6) est fabriqué en un matériau fragile.

10. Système d'entraînement de rotation (1) piézoélectrique selon l'une des revendications précédentes, **caractérisé en ce que** le moyen de mise en tension (6) est exempt de déformations plastiques, au moins dans une zone chargée, de préférence sur la totalité de la longueur du moyen de mise en tension (6).

11. Système d'entraînement de rotation (1) piézoélectrique selon l'une des revendications précédentes, **caractérisé en ce que** le moyen de mise en tension (6) est fixé par adhérence et/ou par continuité de matière et/ou par complémentarité de formes à au moins un tronçon de maintien (7, 8, 10), de préférence à deux tronçons de maintien (7, 8, 10), avantageusement au moins un des tronçons de maintien (7, 8, 10), de préférence les deux tronçons de maintien (7, 8, 10), étant formé/formés sur le cadre (3).

12. Système d'entraînement de rotation (1) piézoélectrique selon l'une des revendications précédentes, **caractérisé en ce que** le tronçon de couplage (5) entoure l'arbre (2) au moins partiellement, de préférence sur plus de la moitié de la périphérie, le tronçon de couplage (5) présentant de préférence deux branches (4a, 4b), qui définissent une ouverture de couplage, l'une des branches (4a) formant un tronçon de maintien (7) pour enserrer le moyen de mise en tension (6) et l'autre branche (4b) formant une zone d'appui (9).

13. Système d'entraînement de rotation (1) piézoélectrique selon l'une des revendications précédentes, **caractérisé en ce que** le cadre (4) présente trois branches (4a, 4b, 4c), qui forment dans les espaces intermédiaires, deux logements d'accueil, l'arbre (2) étant agencé dans l'un des logements d'accueil entre une première branche extérieure (4a) et une branche centrale (4b), et l'actionneur piézoélectrique (3) étant agencé entre une deuxième branche extérieure (4c) et la branche centrale (4b), le moyen de mise en tension (6) étant enserré entre les deux branches extérieures (4a, 4c) du cadre (4), la branche centrale (4b) du cadre formant de préférence une zone d'appui (9), et la deuxième branche extérieure (4c) étant reliée de manière articulée, de préférence par l'intermédiaire d'une articulation à corps solide (4d), à la branche centrale (4b).

14. Système d'entraînement de rotation (1) piézoélectrique selon l'une des revendications précédentes, **caractérisé en ce que** l'un au moins des tronçons de maintien (10) est réalisé par un élément (11), qui assure une fixation sécurisée du moyen de mise en tension (6), notamment de manière réglable.

15. Système d'entraînement de rotation (1) piézoélectrique selon l'une des revendications précédentes, **caractérisé en ce que** l'un au moins des tronçons de maintien (10) est réalisé par un élément (11), qui est fixé de manière sécurisée à l'une des branches, en particulier la deuxième branche extérieure (4c), notamment de manière réglable.
